# EUROPEAN PATENT APPLICATION

(11) **EP 3 738 805 A1**
(43) Date of publication of application: **18.11.2020**
(21) Application number: 18899307.5
(22) Date of filing: 19.12.2018
(51) Int. Cl.: B60H 1/32, B60H 1/00

(54) **VEHICLE AIR CONDITIONING APPARATUS AND CONTROL METHOD FOR VEHICLE AIR CONDITIONING APPARATUS**

(30) Priority: 09.01.2018 JP 2018001530
(71) Applicant: Valeo Japan Co., Ltd., Kumagaya-shi, Saitama 360-0193 (JP)
(72) Inventor: YOSHIZAKI, Hisayoshi, Kumagaya-shi Saitama 360-0193 (JP); NAGANO, Hideki, Kumagaya-shi Saitama 360-0193 (JP); SHICHIKEN, Yutaka, Kumagaya-shi Saitama 360-0193 (JP)
(74) Representative: Neuviale, Bertrand
(86) International application number: PCT/JP2018/046676
(87) International publication number: WO 2019/138807

(57) **Abstract**

The invention provides a structure such that freezing of an evaporator can be prevented, and a control method, for a vehicle-use air conditioning device wherein a temperature of the evaporator is controlled using a fin heat-sensitive sensor, and which includes left and right independent temperature conditioning functions. A contact type temperature sensor 50B is disposed in an evaporator 8 in a region facing a passenger side space 30 on a downstream side of the evaporator 8. Alternatively, a contact type temperature sensor 50A is disposed in contact with the evaporator 8 in a region facing a driver side space 20 on the downstream side of the evaporator 8, an operating state of a compressor 10 is controlled so that a detected temperature (T₈ₐ, T_{8a'}) detected by the temperature sensor 50 is between a lower limit value (T sd) min and an upper limit value (T sd) max of a threshold temperature (T sd) when a normal blowing mode is selected, and a threshold temperature (T sp) is set to a value higher than the threshold temperature (T sd) set when the normal blowing mode is selected when a concentrated blowing mode is selected.

## Description

### Technical Field

The present invention relates to a vehicle-use air conditioning device and a vehicle-use air conditioning device control method such that a driver's seat side (driver side) and a passenger side on a left and right of a vehicle interior can each be independently temperature-conditioned.

### Background Art

A vehicle-use air conditioning device including left and right independent temperature conditioning functions, wherein air conditioned to differing temperatures can be blown to a driver side and a passenger side of a vehicle interior, is already known. With regard to such a vehicle-use air conditioning device, it is proposed in Patent Literature 1 that when a driver is the only occupant, an operating mode wherein a driver side space is swiftly temperature-adjusted (a concentrated blowing mode) is adopted, and an air conditioning operation is carried out with, of a multiple of outlets, all outlets other than those opening onto the driver side space closed. By this kind of air conditioning operation being carried out, temperature-conditioned air can be blown into the driver side space only, because of which the driver side space can be brought swiftly and efficiently toward a set temperature, and a cooling load of an evaporator and power consumption of a compressor can be kept low.

Herein, the vehicle-use air conditioning device is such that a temperature of an evaporator is detected by a temperature sensor, and an air conditioning temperature is brought toward a set temperature by controlling a drive of a compressor based on the detected temperature. Specifically, the compressor is stopped because the air conditioning temperature reaches a set value, or the temperature of the evaporator when reducing an amount of refrigerant discharged is set as a threshold temperature, and the compressor is stopped, or the amount of refrigerant discharged is reduced, when the temperature of the evaporator detected by the temperature sensor is reduced as far as reaching the threshold temperature.

This means that when the temperature of the evaporator is not accurately detected by the temperature sensor, for example, when the detected temperature is higher than the actual temperature of the evaporator, the compressor continues to be operated even when the temperature of the evaporator drops below the threshold temperature, because of which there is a problem in that the compressor is operated to excess, resulting in freezing of the evaporator, or the like. Herein, freezing of the evaporator means that condensed water formed due to water vapor contained in the air being cooled to or below a dew point by the evaporator freezes on an outer surface of the evaporator.

Conversely, when the detected temperature is lower than the actual temperature of the evaporator, it is determined that the evaporator has been cooled to the threshold temperature, and a problem occurs in that the compressor is stopped, or the amount of refrigerant discharged decreases, despite the temperature of conditioned air blown into the vehicle interior not being reduced to the set value.

Consequently, there is a need for the actual temperature of the evaporator to be detected with high accuracy by the temperature sensor, but a configuration (fin heat-sensitive type) wherein the temperature sensor is brought into contact with and attached to a heat exchanging fin of the evaporator by a fixing clip is proposed in Patent Literature 2, according to which the temperature of the heat exchanging fin can be detected directly and accurately.

Also, a configuration (air heat-sensitive type) wherein the temperature sensor is fixed, separated from a heat exchanging fin, on a downstream side of the evaporator by an air-directing clip is proposed in Patent Literature 3, according to which the temperature of air cooled by the heat exchanging fin can be detected accurately.

### Citation List

### Patent Literature

Patent Literature 1: JP-A-2008-296717
Patent Literature 2: JP-A-10-291414
Patent Literature 3: JP-A-10-207272

### Summary of Invention

### Technical Problem

However, among vehicle-use air conditioning devices including left and right independent temperature conditioning functions, the kind of vehicle-use air conditioning device proposed in Patent Literature 1 wherein a concentrated blowing mode can be selected as the operating mode is such that when a normal blowing mode is selected as a blowing mode, air supplied from a blower into a case flows through the driver side space and the passenger side space downstream of the evaporator, but when the concentrated blowing mode is selected, the air flows mainly through the driver side space, and barely flows through the passenger side space (does not flow at all, or flows but the amount is slight). Because of this, the temperature of a portion of the evaporator facing the passenger side space, through which air barely flows, is lower than the temperature of another portion (a portion facing the driver side space, through which air flows).

Consequently, when the fin heat-sensitive type of sensor proposed in, for example, Patent Literature 2 is installed in the driver side space of the evaporator, and the temperature of the evaporator is controlled, there is greater concern that condensed water will freeze on a portion of the evaporator positioned in the passenger side space when the concentrated blowing mode is selected. Further, when changing from the concentrated blowing mode to the normal blowing mode is subsequently selected, a passage of air attempting to flow through the passenger side space is impeded by the frozen evaporator, and there is concern that the passenger will not be able to appropriately obtain cold air.

### Solution to Problem

The invention, having been contrived in consideration of the aforementioned problems, has an object of providing a structure and a control method such that freezing of condensed water on an evaporator can be prevented for a vehicle-use air conditioning device wherein a temperature of the evaporator is controlled using a fin heat-sensitive type of sensor that is brought into contact with a heat exchanging fin and can detect the temperature of the evaporator with high accuracy, the vehicle-use air conditioning device including left and right independent temperature conditioning functions. Solution to Problem

In order to achieve the heretofore described object, a vehicle-use air conditioning device according to the invention is characterized by including a refrigeration cycle (C) wherein a compressor (10), a condenser (11), an expansion device (12), and an evaporator (8) are connected by piping (13), and around which a refrigerant circulates, a temperature conditioning unit (1) having a blower (5), a case (3) that houses the evaporator in an air passage along which air sent by the blower flows, a partitioning portion (14) that partitions the air passage on a downstream side of the evaporator into a driver side air passage (20) and a passenger side air passage (30) separate from the driver side air passage, driver side outlets (23, 24) that communicate with the driver side air passage and blow out air to be supplied to a driver, passenger side outlets (33, 34) that communicate with the passenger side air passage and blow out air to be supplied to a passenger, driver side doors (23d, 24d) that open and close the driver side outlets, and passenger side doors (33d, 34d) that open and close the passenger side outlets, a control device (2) that controls an air conditioning state of a vehicle interior, and can select a normal blowing mode, wherein the driver side doors are opened and the passenger side doors are opened, and a concentrated blowing mode, wherein the driver side doors are opened and the passenger side doors are closed, and a temperature sensor (50A) that is disposed in contact with the evaporator in a region facing the passenger side air passage on the downstream side of the evaporator, and detects a temperature of the evaporator.

The vehicle-use air conditioning device according to the invention is such that the temperature conditioning unit (1) preferably has a defrost outlet (40) that communicates with the driver side air passage and/or the passenger side air passage and blows out air to be supplied to a windshield of a vehicle, and a defrost door (40d) that opens and closes the defrost outlet. By the defrost door being opened, air is supplied to the windshield when condensation forms on the windshield, and the condensation is cleared, whereby clouding of the glass can be prevented. Also, by the defrost door being closed, a space on a periphery of the driver in the vehicle interior can be efficiently temperature conditioned when the concentrated blowing mode is selected.

Also, a vehicle-use air conditioning device according to the invention includes a refrigeration cycle (C) wherein a compressor (10), a condenser (11), an expansion device (12), and an evaporator (8) are connected by piping (13), and around which a refrigerant circulates, a temperature conditioning unit (1) having a blower (5), a case (3) that houses the evaporator in an air passage along which air sent by the blower flows, a partitioning portion (14) that partitions the air passage on a downstream side of the evaporator into a driver side air passage (20) and a passenger side air passage (30) separate from the driver side air passage, driver side outlets (23, 24) that communicate with the driver side air passage and blow out air to be supplied to a driver, passenger side outlets (33, 34) that communicate with the passenger side air passage and blow out air to be supplied to a passenger, driver side doors (23d, 24d) that open and close the driver side outlets, and passenger side doors (33d, 34d) that open and close the passenger side outlets, a control device (2) that controls an air conditioning state of a vehicle interior, and can select a normal blowing mode, wherein the driver side doors are opened and the passenger side doors are opened, and a concentrated blowing mode, wherein the driver side doors are opened and the passenger side doors are closed, and a temperature sensor (50B) that is disposed in contact with the evaporator in a region facing the driver side air passage on the downstream side of the evaporator, and detects a temperature of the evaporator, wherein the control device (2) stops an operation of the compressor (10) or reduces an amount of refrigerant discharged when a detected temperature (T₈ₐ) detected by the temperature sensor (50B) reaches a lower limit value (T sd) min of a threshold temperature (T sd), and subsequently starts an operation of the compressor (10) or increases the amount of refrigerant discharged when the detected temperature (T_{8a'}) reaches an upper limit value (T sd) max of the threshold temperature (T sd), and sets a threshold temperature (T sp) to a value higher than the threshold temperature (T sd) set when the normal blowing mode is selected when the concentrated blowing mode is selected. When the concentrated blowing mode is selected, the temperature of a portion of the evaporator positioned in the passenger side air passage is liable to drop without any high-temperature air flowing through, and freezing is likely. However, the threshold temperature (T sp) when the concentrated blowing mode is selected is set to a value higher than the threshold temperature (T sd) set when the normal blowing mode is selected, whereby freezing is prevented.

The control device (2) of the vehicle-use air conditioning device according to the invention preferably controls the vehicle-use air conditioning device so as to set to a higher value when the concentrated blowing mode is selected, and furthermore, the greater an amount of air sent by the blower (5). When the amount of air sent is large, the amount of refrigerant circulating is generally also large, and the portion of the evaporator positioned in the passenger side air passage is more likely to freeze, but freezing is prevented by the threshold temperature (T sp) when the concentrated blowing mode is selected being set to a higher value the greater the amount of air sent.

In the case of the control device (2) of the vehicle-use air conditioning device according to the invention too, the temperature conditioning unit (1) preferably has a defrost outlet (40) that communicates with the driver side air passage and/or the passenger side air passage and blows out air to be supplied to a windshield of a vehicle, and a defrost door (40d) that opens and closes the defrost outlet. By the defrost door being opened, air is supplied to the windshield when condensation forms on the windshield, and the condensation is cleared, whereby clouding of the glass can be prevented. Also, by the defrost door being closed, a space on a periphery of the driver in the vehicle interior can be efficiently temperature conditioned when the concentrated blowing mode is selected.

### Advantageous Effects of Invention

A vehicle-use air conditioning device including left and right independent temperature conditioning functions such that freezing of condensed water on an evaporator can be prevented, and a control method, can be provided.

### Brief Description of Drawings

[Fig. 1] Fig. 1 is a plan sectional view schematically showing a basic configuration of a vehicle-use air conditioning device according to the invention.
[Fig. 2] Fig. 2 is a perspective view looking from a downstream side toward an upstream side of a configuration of an evaporator of a vehicle-use air conditioning device, and a vicinity thereof, in a first embodiment according to the invention.
[Fig. 3] Fig. 3 is a flowchart showing a vehicle-use air conditioning device control procedure in the first embodiment according to the invention.
[Fig. 4] Fig. 4(a) and (b) are drawings showing a relationship between a detected temperature of the evaporator and a threshold temperature when a normal blowing mode and a concentrated blowing mode are selected in accordance with a vehicle-use air conditioning device control method in the first embodiment according to the invention.
[Fig. 5] Fig. 5 is a perspective view looking from the downstream side toward the upstream side of a configuration of the evaporator of the vehicle-use air conditioning device, and a vicinity thereof, in a second embodiment according to the invention.
[Fig. 6] Fig. 6 is a flowchart showing a vehicle-use air conditioning device control procedure in the second embodiment according to the invention.
[Fig. 7] Fig. 7 (a) and (b) are drawings showing a relationship between a detected temperature of the evaporator and a threshold temperature when the normal blowing mode and the concentrated blowing mode are selected in accordance with the vehicle-use air conditioning device control method in the second embodiment according to the invention.

### Description of Embodiments

Hereafter, embodiments of the invention will be described based on the attached drawings.

### Vehicle-use Air Conditioning Device

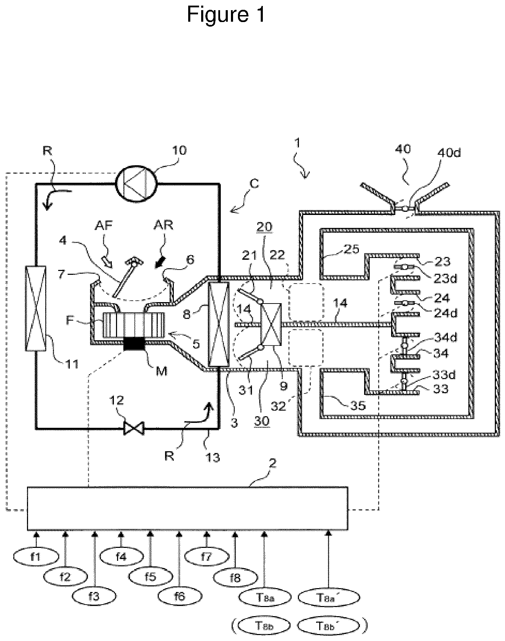

Firstly, a basic configuration of a vehicle-use air conditioning device according to the invention will be described hereafter, based on Fig. 1.

That is, Fig. 1 is a plan sectional view schematically showing a basic configuration of a vehicle-use air conditioning device according to the invention, wherein the vehicle-use air conditioning device shown includes left and right independent temperature conditioning functions such that air conditioned to differing temperatures can be blown to a driver's seat side (driver side) and a passenger side of a vehicle interior, and is configured to have a refrigeration cycle C, a temperature conditioning unit 1, and a control device 2 that controls the temperature conditioning unit 1 and a compressor 10 to be described hereafter.

The refrigeration cycle C is such that the compressor 10, a condenser 11, an expansion device 12, and an evaporator 8 are connected by piping 13, and is configured so that a refrigerant can circulate around an interior owing to the compressor 10 being driven.

The compressor 10 is mechanically connected to, and driven by, a drive source such as an internal combustion engine or an electric motor. A clutch coupled to the drive source and a refrigerant compressing unit can be mechanically coupled or detached. When a predetermined electrical signal is provided, the clutch and the refrigerant compressing unit are mechanically coupled, and a refrigerant is compressed. The compressed refrigerant becomes a high temperature, high pressure gas, and is discharged into the interior of the refrigeration cycle C. Also, the compressor 10 is broadly divided into a variable displacement type of compressor, wherein the amount of refrigerant discharged can be changed in accordance with a separately provided signal, and a fixed displacement type, wherein the amount of refrigerant discharged cannot be changed.

The refrigerant discharged from the compressor 10 flows into the condenser 11. The condenser 11 is a heat exchanger that exchanges heat of the refrigerant that has flowed into the interior and that of air flowing through an exterior. The condenser 11 is configured to have a multiple of tubes, through whose interior the refrigerant flows, and a multiple of heat dissipating fins provided between each pair of tubes. The refrigerant is cooled by external air, becomes a liquid or a gas-liquid mixture, and flows out from the condenser 11. The condenser 11 is also called a condenser. In order to increase the efficiency of the heat exchange with the external air, the condenser 11 is generally disposed in a vehicle front chamber (not shown) provided farther forward in the vehicle than the vehicle interior in which an occupant rides. In a vehicle in which an internal combustion engine is disposed, the vehicle front chamber is also called the engine room. The vehicle front chamber and the vehicle interior are separated by a partition (not shown). The partition may be called a fire wall or a dashboard.

The refrigerant that has flowed out from the condenser 11 flows into the expansion device 12. The expansion device 12 has a throttle unit in an interior thereof, and adiabatically expands the liquid or gas-liquid mixture refrigerant. Herein, a commonly known gas-liquid separator (not shown) is preferably provided between the condenser 11 and the expansion device 12. By the refrigerant being separated into a gas and a liquid by the gas-liquid separator, and only the liquid being supplied to the expansion device 12, the refrigerant can be stably adiabatically expanded. The refrigerant adiabatically expanded by the expansion device becomes a gas-liquid mixture, and flows out.

The refrigerant that has flowed out of the expansion device 12 flows into the evaporator 8. The evaporator 8 is a heat exchanger that exchanges heat of the refrigerant that has flowed into an interior and that of air flowing through the exterior. The evaporator 8 is configured to have a multiple of tubes, through whose interior the refrigerant flows, and a multiple of heat dissipating fins provided between each pair of tubes. The refrigerant absorbs heat from the air, becomes a gas, and flows out from the evaporator 8. The air is cooled by the refrigerant. Herein, condensed water forms on an external surface of the evaporator 8 when air flowing through is cooled. The farther the temperature of the evaporator 8 drops below zero degrees, and the longer the time for which the temperature is below zero degrees, the greater the concern that the condensed water will freeze. In the event that freezing occurs, the flow of air through the evaporator 8 will be impeded.

The refrigerant that has flowed out of the evaporator 8 flows into (is drawn into) the compressor 10 again. Further, when the drive of the compressor 10 is being continued, the refrigerant is compressed, becomes a high temperature, high pressure gas, and is discharged.

The compressor 10 is disposed in the vehicle front chamber. The condenser 11 is disposed, as described, in the vehicle front chamber. The gas-liquid separator is disposed in the vehicle front chamber. The expansion device is disposed in the vehicle front chamber or the vehicle interior. The evaporator 8 is disposed in the vehicle interior.

The temperature conditioning unit 1 is configured so as to be able to supply air conditioned to differing temperatures to the driver's seat side (driver side) and the passenger side of the vehicle interior. The temperature conditioning unit 1 has a blower 5, a case 3 that houses an evaporator in an air passage along which air sent by the blower flows, a partitioning portion 14 that partitions the air passage on a downstream side of the evaporator into a driver side air passage 20 and a passenger side air passage 30 separate from the driver side passage, driver side outlets 23 and 24 that communicate with the driver side air passage and blow out air to be supplied to the driver, passenger side outlets 33 and 34 that communicate with the passenger side air passage and blow out air to be supplied to a passenger, driver side doors 23d and 24d that open and close the driver side outlets, and passenger side doors 33d and 34d that open and close the passenger side outlets.

Also, the temperature conditioning unit 1 has an intake unit on an upstream side of the blower 5 in the flow of air, as shown in Fig. 1. The intake unit has an internal air suction port 6 that suctions air (internal air AR) from the vehicle interior, an external air suction port 7 that suctions air (external air AF) from the exterior of the vehicle, and an internal-external air switching door 4 that changes the proportions of internal air and external air to be suctioned.

The blower 5 is such that a sirocco fan F is attached so as to be able to rotate to a rotary shaft of an electric motor M, air is suctioned from the intake unit by the sirocco fan F being rotated, and the air is blown out into the air passage of the case 3.

The case 3 has, in an interior thereof, an air passage through which air sent by the blower 5 flows. The evaporator 8, which is one portion of the refrigeration cycle C, is disposed in the air passage. Air sent by the blower 5 can be cooled by the motor M of the blower 5 being driven and the compressor 10 being driven.

A heating heat exchanger 9 is disposed in the air passage on a downstream side of the evaporator 8 in the flow of air. A commonly known heat exchanger is utilized as the heating heat exchanger 9. For example, a warm water type of heat exchanger that heats air by utilizing the heat of warm water that cools an internal combustion engine, a refrigerant heat dissipation type of heat exchanger that heats air by utilizing the heat of a refrigerant, an electrical heat generation type of heat exchanger that heats air by causing an element to generate heat using electrical power, or the like, none of which is shown, is utilized as appropriate.

In this embodiment, the air passage of the case 3 on the downstream side of the evaporator 8 is partitioned into the driver side air passage 20 and the passenger side space 30 by the partitioning portion 14. A configuration wherein the driver side air passage 20 and the passenger side space 30 are partitioned by a plate-form member, and the driver side air passage 20 and the passenger side space 30 are neighboring, is shown in Fig. 1, Fig. 2, and Fig. 3, but this is not limiting. For example, a configuration may be such that the driver side air passage 20 and the passenger side space 30 are partitioned by a partitioning portion of an unshown configuration, and are separated.

The heating heat exchanger 9 is disposed in such a way that one portion thereof is exposed in both the driver side air passage 20 and the passenger side space 30. Because of this, in both the driver side air passage 20 and the passenger side space 30, air that has flowed through the heating heat exchanger 9 is heated to become warm air, and air that has circumvented the heating heat exchanger 9 remains as cold air without being heated. Although not shown, the heating heat exchanger 9 may be provided separately in each of the driver side air passage 20 and the passenger side air passage 30.

A driver side air mix door 21 is disposed between the evaporator 8 and the heating heat exchanger 9 in the driver side air passage 20. A passenger side air mix door 31 is disposed between the evaporator 8 and the heating heat exchanger 9 in the passenger side air passage 30. The driver side air mix door 21 and the passenger side air mix door 31 change the proportions of air that heads to the heating heat exchanger 9 and air that circumvents the heating heat exchanger 9 by positions thereof being changed as appropriate, and are shown as cantilever doors in Fig. 1, but not being limited to this, the doors may both be commonly known butterfly doors, sliding doors, or rotary doors. Also, the driver side air mix door 21 and the passenger side air mix door 31 may be air mix doors of differing forms.

Warm air that has flowed through the heating heat exchanger 9 and cold air that has circumvented the heating heat exchanger 9 are mixed in each of a driver side mixing space 22 and a passenger side mixing space 32, becoming temperature conditioned air. According to the heretofore described structure, air that is temperature conditioned in the driver side air passage 20 and air that is temperature conditioned in the passenger side air passage 30 can be conditioned to mutually differing temperatures.

The mixing space 22 of the driver side air passage 20 communicates with a defrost outlet 40 that blows out air to be supplied to a windshield (not shown) of the vehicle, a driver side vent outlet 23 that blows out air to be supplied to an upper body of the driver, and a driver side foot outlet 24 that blows out air to be supplied to a foot area of the driver, downstream in the air flow direction. The driver side mixing space 22 and the defrost outlet 40 communicate via a driver side defrost passage 25. A defrost door 40d that opens and closes the defrost outlet 40 is provided in a vicinity of the defrost outlet 40. A driver side vent door 23d that opens and closes the driver side vent outlet 23 is provided in a vicinity of the driver side vent outlet 23. A driver side foot door 24d that opens and closes the driver side foot outlet 24 is provided in a vicinity of the driver side foot outlet 24.

The mixing space 32 of the passenger side air passage 30 communicates with the defrost outlet 40, which blows out air to be supplied to the windshield (not shown) of the vehicle, a passenger side vent outlet 33 that blows out air to be supplied to an upper body of a passenger, and a passenger side foot outlet 34 that blows out air to be supplied to a foot area of the passenger, downstream in the air flow direction. The passenger side mixing space 32 and the defrost outlet 40 communicate via a passenger side defrost passage 35. A passenger side vent door 33d that opens and closes the passenger side vent outlet 33 is provided in a vicinity of the passenger side vent outlet 33. A passenger side foot door 34d that opens and closes the passenger side foot outlet 34 is provided in a vicinity of the passenger side foot outlet 34.

The driver side vent outlet 23 and the driver side foot outlet 24 are both driver side outlets. The passenger side vent outlet 33 and the passenger side foot outlet 34 are both passenger side outlets.

The driver side defrost passage 25 and the passenger side defrost passage 35 converge on an upstream side of the defrost outlet 40, and the defrost door 40d is provided on a downstream side of a convergence point. Although a form that has both the driver side defrost passage 25 and the passenger side defrost passage 35 is shown in the disclosure, a form that has only either one thereof may also be adopted.

According to the heretofore described configuration, a supply to the driver of air that has been temperature conditioned in the mixing space 22 of the driver side air passage 20, or a stopping of the supply, can be carried out by each door (the driver side vent door 23d and the driver side foot door 24d) provided in the driver side outlets being opened or closed as appropriate. Also, a supply to a passenger of air that has been temperature conditioned in the mixing space 32 of the passenger side air passage 20, or a stopping of the supply, can be carried out by each door (the passenger side vent door 33d and the passenger side foot door 34d) provided in the passenger side outlets being opened or closed as appropriate. A supply to the windscreen of a mixture of air that has been temperature conditioned in the mixing space 22 of the driver side air passage 20 and air that has been temperature conditioned in the mixing space 32 of the passenger side air passage 20, or a stopping of the supply, can be carried out by the defrost door 40d being opened or closed as appropriate.

The control device 2 is not particularly limited, provided that the control device 2 can control the temperature conditioning unit 1 and the refrigeration cycle C. For example, the control device 2 is an ECU (engine control unit) that controls a vehicle engine, an air conditioning control amplifier (not shown) that controls only a vehicle-use air conditioning device, or the like. Unshown, commonly known information (a vehicle interior set temperature f1 or air volume f2 set by the driver or a passenger, an external temperature f3, a vehicle interior temperature f4, a sunlight amount f5, a passenger presence f6, and set proportions f7 and f8 of suctioned internal and external air set by the driver or a passenger), air temperatures T₈ₐ and T_{8b} detected by a contact type temperature sensor 50, and the like are input, calculated in accordance with a predetermined equation or a condition map, and output so as to control the presence or absence of a rotational operation of the electric motor M, the presence or absence of a drive of the compressor 10 (driving and stopping of the compressor 10), an amount of refrigerant discharged, a rotational position of an actuator (not shown) that changes the opening and closing of each of the doors 23d and 24d provided in the driver side outlets, and a rotational position of an actuator (not shown) that changes the opening and closing of each of the doors 33d and 34d provided in the passenger side outlets. In addition to this, output is preferably carried out so as to also control any one, or a multiple of elements, among a rotational position of an actuator (not shown) that changes the position of the internal-external air switching door 4, a rotational speed of the electric motor M, a rotational position of an actuator (not shown) that changes the positions of the air mix doors 21 and 31, a rotational position of an actuator (not shown) that changes the opening and closing of the defrost door 40d, and the like. When an electrical heat generation type of heat exchanger is used as the heating heat exchanger 9, an amount of heat generated by an electrical heat generating element is preferably controlled.

### First Embodiment

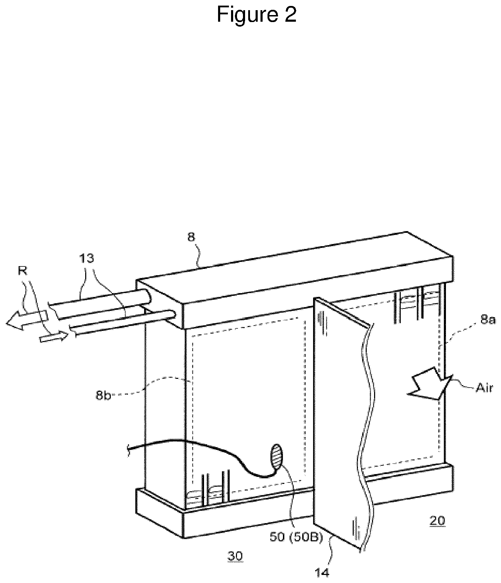

In a first embodiment, the existing, commonly known contact type temperature sensor 50 (50B) is disposed in a region facing the passenger side air passage 20 on the downstream side of the evaporator 8 so that a fin of the evaporator 8 and a temperature detecting unit of the temperature sensor come into contact, as shown in Fig. 2, and the temperature of the evaporator 8 itself is detected by the temperature sensor 50B. More specifically, temperatures T_{8b} and T_{8b'} of a portion 8b of the evaporator 8 disposed in the passenger side air passage 30 are detected. The temperature sensor 50B is also called a fin heat-sensitive type thermosensor.

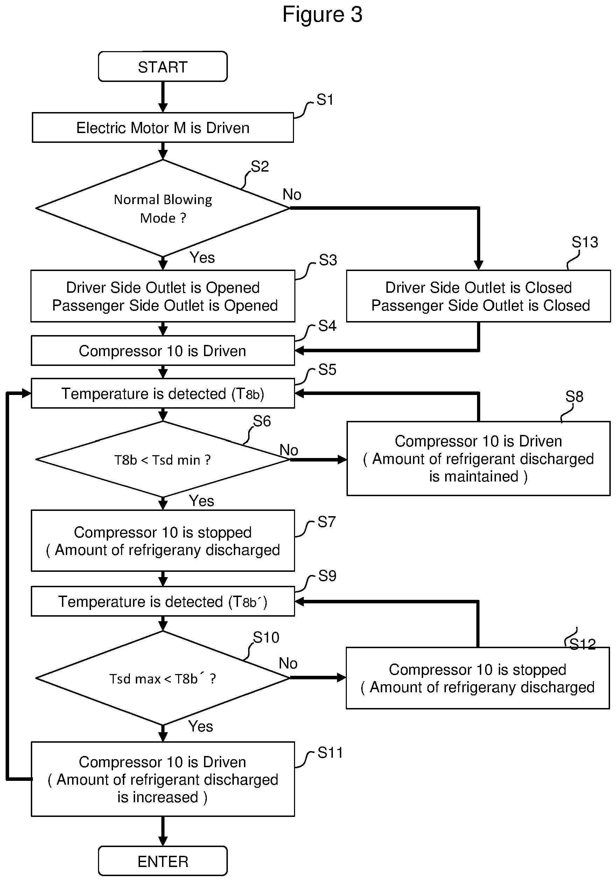

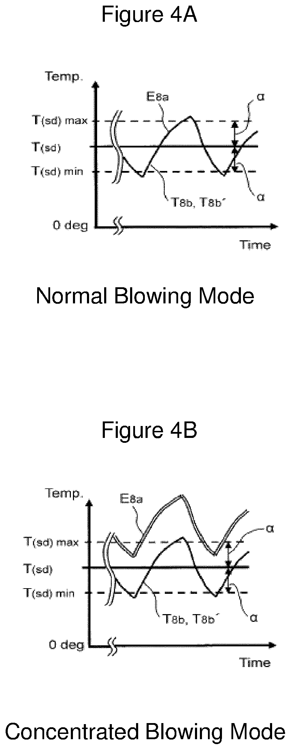

A vehicle-use air conditioning device control method according to the invention will be described, divided into a case in which a normal blowing mode is selected as a blowing mode, and a case in which a concentrated blowing mode is selected. Hereafter, a case in which a vehicle-use air conditioning device is operated as a cooler in summer will be described, while referring to Fig. 3 and Fig. 4. Fig. 3 is a flowchart showing a vehicle-use air conditioning device control procedure according to the invention, and Figs. 4(a) and (b) are drawings showing a relationship between a detected temperature of the evaporator and a threshold temperature when the normal blowing mode and the concentrated blowing mode are selected in accordance with a vehicle-use air conditioning device control method in the first embodiment according to the invention.

When Normal Blowing Mode is Selected

Firstly, when the vehicle-use air conditioning device is operated as a cooler, control by the control device 2 is started, and air is sent into the air passage of the case 3 by the electric motor M of the blower 5 being rotated (step S1).

Next, either the normal blowing mode or the concentrated blowing mode is selected as the blowing mode (step S2 of Fig. 3). At this time, the existence or otherwise of a passenger side occupant is preferably detected by detection means such as a seat occupancy sensor provided in a seat, an infrared sensor provided in a roof or an instrument panel in the vehicle interior, a seat belt fastening signal, or an individual seat door open/closed signal (none of which is shown). Information on the existence or otherwise of an occupant detected by the detection means is input as information f6 into the control means 2.

When the normal blowing mode is selected as the blowing mode (step S2: Yes), at least one of the doors provided in the driver side outlet (the driver side vent door 23d and the driver side foot door 24d) and at least one of the doors provided in the passenger side outlet (the passenger side vent door 33d and the passenger side foot door 34d) is opened (step S3). At this time, all of the doors provided in the driver side outlet and the doors provided in the passenger side outlet may be opened. The blowing mode is selected as appropriate in accordance with the output of the control device 2.

Next, the clutch of the compressor 10 and the refrigerant compressing unit are mechanically coupled, and the compressor 10 is driven (step S4). Because of this, the refrigerant circulates around the refrigeration cycle C, and cooling of air that passes through the evaporator 8 is started in the evaporator 8. Reference sign R in Fig. 1 and Fig. 2 indicates a refrigerant circulation direction.

When the cooling of air is started, the temperature (T_{8b}) of air cooled by the evaporator 8 is detected by the temperature sensor 50B, which is installed in a region facing the passenger side air passage 30 (step S5).

In this embodiment, the temperature T_{8b} detected by the temperature sensor 50B is compared with a lower limit value (T sd)min (= T sd - α) of a predetermined threshold temperature T sd shown in Fig. 4(a) (step S6). Preferably, 0.5°C to 2.5°C is selected as the threshold temperature T sd. Also, 0.5°C to 1.5°C is preferably selected as a difference (± α) between an upper limit value and the lower limit value of the threshold temperature T sd.

Further, when it is determined that the temperature T_{8b} is lower than the lower limit value (T sd)min of the threshold temperature T sd, the operation of the compressor 10 stops, or the amount of refrigerant discharged (amount circulating) is reduced (step S7) . When it is determined that the temperature T_{8b} is equal to or higher than the lower limit value (T sd)min of the threshold temperature T sd, the operation of the compressor 10 is continued, or the amount of refrigerant discharged (amount circulating) is maintained in an increased state (step S8), and the processes of steps S5, S6, and S8 are repeated.

After the operation of the compressor 10 stops or the amount of refrigerant discharged (amount circulating) is reduced in step S7, the temperature (T_{8b'}) of air that has passed through the evaporator 8 is detected by the temperature sensor 50B (step S9) .

In this embodiment, the temperature T_{8b'} detected by the temperature sensor 50B is compared with an upper limit value (T sd)max (= T sd + α) of the predetermined threshold temperature T sd shown in Fig. 4(a) (step S10). When it is determined that the temperature T_{8b'} is higher than the upper limit value (T sd)max of the threshold temperature T sd, the operation of the compressor 10 restarts, or the amount of refrigerant discharged (amount circulating) is increased (step S11). When it is determined that the temperature T_{8b'} is equal to or lower than the upper limit value (T sd)max of the threshold temperature T sd, the stop of the compressor 10 is continued, or the amount of refrigerant discharged (amount circulating) is maintained in a reduced state (step S12), and the processes of steps S9, S10, and S12 are repeated.

After the operation of the compressor 10 restarts or the amount of refrigerant discharged (amount circulating) is increased in step S11, the procedure returns to step S5, and the processes from S5 to S11 are selected and repeated in accordance with the situation.

Not only the temperatures T_{8b} and T_{8b'} detected by the temperature sensor 50B, but also an estimated temperature E₈ₐ of a portion 8a of the evaporator 8 disposed in the driver side air passage 20 is shown in Fig. 4(a). In the normal blowing mode, the temperature of the portion 8a and the temperature of the portion 8b of the evaporator 8 disposed in the passenger side air passage 30 are approximately equal, as air from the blower 5 is supplied to both.

When Concentrated Blowing Mode is Selected

When the concentrated blowing mode is selected as the blowing mode (step S2: No), at least one of the doors provided in the driver side outlet (the driver side vent door 23d and the driver side foot door 24d) is opened, and all of the doors provided in the passenger side outlet (the passenger side vent door 33d and the passenger side foot door 34d) are closed (step S13). At this time, all of the doors provided in the driver side outlet may be opened. The blowing mode of the driver side outlets is selected as appropriate in accordance with the output of the control device 2. Further, as the passenger side outlets (33 and 34) are all closed, air does not flow into the portion 8b of the evaporator 8 positioned in the passenger side air passage 30, as shown in Fig. 2, or flows but the amount is slight, and air having heat is insufficiently supplied.

Next, the clutch of the compressor 10 and the refrigerant compressing unit are mechanically coupled, and the compressor 10 is driven (step S4), but from step 4 to step 12, the same control as when the normal blowing mode is selected is carried out.

In the concentrated blowing mode, the compressor 10 is controlled by comparing the temperatures T_{8b} and T_{8b'} detected by the temperature sensor 50B disposed in the portion 8b of the evaporator 8 disposed in the passenger side air passage 30 with a temperature range (the upper limit value T sd max and the lower limit value T sd min) centered on the threshold temperature T sd. Herein, the temperature range centered on the threshold temperature T sd is equal to that when controlling in the normal blowing mode (particularly steps S6 and S10), because of which the temperature of the portion 8b is controlled to be equal to the temperature of the evaporator 8 in the normal blowing mode, as shown in Fig. 4(b). That is, the portion 8b is controlled to be the same temperature regardless of the blowing mode.

Meanwhile, when in the concentrated blowing mode, the estimated temperature of the portion 8a of the evaporator 8 disposed in the driver side air passage 20 becomes higher than the temperature of the portion 8b of the evaporator 8 disposed in the passenger side air passage 30, as shown by reference sign E₈ₐ in Fig. 4(b). In this way, even when in the concentrated blowing mode, the temperature of no portion of the evaporator 8 drops below the temperature of the evaporator 8 in the normal blowing mode, and freezing is prevented.

### Second Embodiment

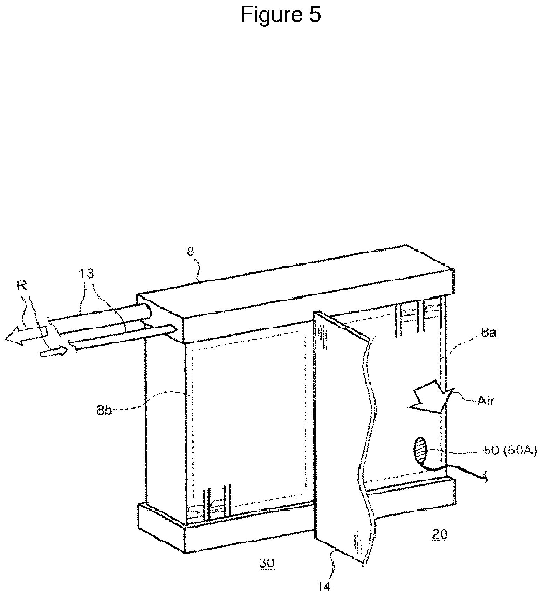

In a second embodiment, the existing, commonly known contact type temperature sensor 50 (50A) is disposed in a region facing the passenger side air passage 20 on the downstream side of the evaporator 8 so that a fin of the evaporator 8 and the temperature detecting unit of the temperature sensor come into contact, as shown in Fig. 5, and the temperature of the evaporator 8 itself is detected by the temperature sensor 50A. More specifically, temperatures T₈ₐ and T_{8a'} of the portion 8a of the evaporator 8 disposed in the driver side air passage 20 are detected.

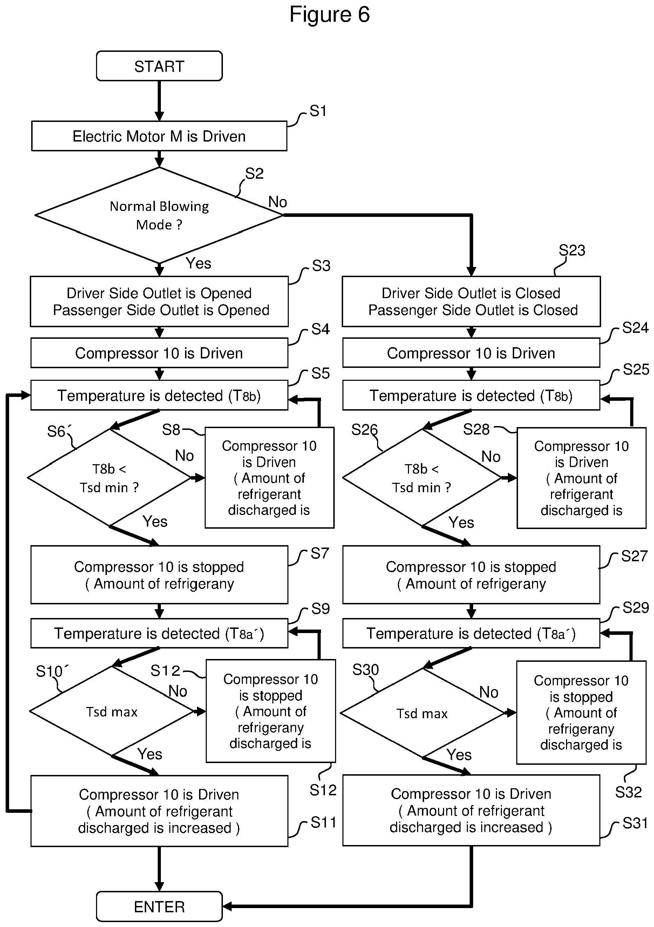

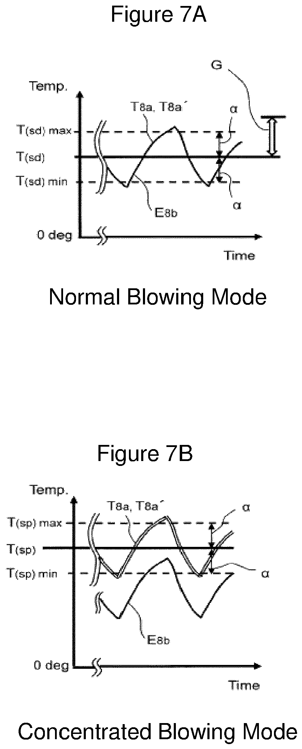

A vehicle-use air conditioning device control method according to the invention will be described, divided into a case in which the normal blowing mode is selected as the blowing mode, and a case in which the concentrated blowing mode is selected. Hereafter, a case in which a vehicle-use air conditioning device is operated as a cooler in summer will be described, while referring to Fig. 6 and Fig. 7. Fig. 6 is a flowchart showing a vehicle-use air conditioning device control procedure according to the invention, and Figs. 7(a) and (b) are drawings showing a relationship between a detected temperature of the evaporator and a threshold temperature when the normal blowing mode and the concentrated blowing mode are selected in accordance with a vehicle-use air conditioning device control method in the second embodiment according to the invention.

When Normal Blowing Mode is Selected

Firstly, when the vehicle-use air conditioning device is operated as a cooler, control by the control device 2 is started, and air is sent into the air passage of the case 3 by the electric motor M of the blower 5 being rotated, in the same way as in the first embodiment (step S1). Hereafter, control is basically carried out in steps the same as steps S2 to S12 of the first working example. Strictly speaking, a point wherein a comparison with T sd min is carried out using T₈ₐ instead of T_{8b} in step S6', and a point wherein a comparison with T sd max is carried out using T_{8a'} instead of T_{8b'} in step S12', differ from the first embodiment.

Because of this, the temperature (T₈ₐ, T_{8a'}) of the evaporator 8 shown in Fig. 7(a) is controlled to be the same as the temperature (T_{8b}, T_{8b'}) of the evaporator 8 shown in Fig. 4(a).

When Concentrated Blowing Mode is Selected

When the concentrated blowing mode is selected as the blowing mode (step S2: No), at least one of the doors provided in the driver side outlet (the driver side vent door 23d and the driver side foot door 24d) is opened, and all of the doors provided in the passenger side outlet (the passenger side vent door 33d and the passenger side foot door 34d) are closed (step S23). At this time, all of the doors provided in the driver side outlet may be opened. The blowing mode of the driver side outlets is selected as appropriate in accordance with the output of the control device 2. Further, as the passenger side outlets (33 and 34) are all closed, air does not flow into the portion 8b of the evaporator 8 positioned in the passenger side air passage 30, as shown in Fig. 5, or flows but the amount is slight, and air having heat is insufficiently supplied.

Step 24 to step 32 form a flow the same as step 14 to step 22 in the first working example, with the exception of steps S26 and S30. In step S26, the subject of comparison of the temperatures T₈ₐ and T_{8a'} detected by the temperature sensor 50 is a temperature range centered on a threshold temperature T sp, rather than the temperature range centered on the threshold temperature T sd. Herein, the threshold temperature T sp is a temperature higher than the threshold temperature T sp, as shown in Fig. 7, and has a temperature difference G.

As a result of this, the temperature of the portion 8a positioned in the driver side air passage 20 becomes higher than the temperature of the evaporator 8 in the normal blowing mode shown in Fig. 7(a), and freezing is prevented, because the temperature is controlled so as to be within the temperature range indicated by double lines in Fig. 7(b).

When in the concentrated blowing mode, the temperature of the portion 8b positioned in the passenger side air passage 30 drops below that of the portion 8a. However, as the portion 8a positioned in the driver side air passage 20 is controlled in advance at a high temperature so as to have the temperature difference G, the temperature of the portion 8b is controlled so as to become an estimated temperature E_{8b} (the temperature shown by a solid line) in Fig. 7(b), the temperature does not drop greatly below zero degrees, and freezing is prevented. Also, the temperature of the evaporator 8 can be reliably detected in the portion 8a facing the driver side air passage, where there is little concern about freezing, because of which a cooling load of the evaporator 8 and power consumption of the compressor 10 due to excessive operation of the compressor 10 can be kept low.

Herein, the temperature difference G between the threshold temperature T sd and the threshold temperature T sp is preferably 1°C to 5°C. The temperature of the evaporator 8 is controlled with the region 8a facing the driver side air passage 20 as a reference. This means that when the value of the temperature difference G is too large, the temperature of cold air supplied to the driver when the concentrated blowing mode is selected rises considerably with respect to the temperature in the normal blowing mode, and there is concern that a sense of comfort will be lost. When the value of the temperature difference G is too small, the temperature of the region 8b facing the passenger side air passage 30 drops considerably to below zero, and concern that freezing will occur increases.

### Second Embodiment Modification

In Fig. 7, the threshold temperature T sp in the concentrated blowing mode is set to be high with respect to the threshold temperature T sd in the normal blowing mode so as to have the temperature difference G, but the value of the temperature difference G is preferably changed in accordance with various kinds of condition. For example, freezing of the portion 8b positioned in the passenger side air passage 30 is liable to occur when the amount of air supplied from the blower 5 increases, when the temperature of air supplied from the blower 5 rises, when the amount of refrigerant discharged from the compressor 10 increases, when the traveling speed of the vehicle rises and the amount of heat dissipated by the condenser 11 increases, and the like. Because of this, the temperature difference G is preferably enlarged, and the threshold temperature T sp set high, in accordance with one or a multiple of these items.

### Other Embodiments

In step S13 (Fig. 3) and step 23 (Fig. 6) in the concentrated blowing mode, at least one of the doors provided in the driver side outlet (the driver side vent door 23d and the driver side foot door 24d) is opened, and all of the doors provided in the passenger side outlet (the passenger side vent door 33d and the passenger side foot door 34d) are closed (step S12), but furthermore, the defrost door 40d may also be closed at this point. All air sent into the case 3 by the blower 5 and temperature conditioned is discharged from the driver side outlets (23 and 24), and a space on a periphery of the driver in the vehicle interior can be efficiently temperature conditioned.

### Reference Signs List

1 Temperature conditioning unit
2 Control device
3 Case
4 Internal-external air switching door
5 Blower
6 Internal air suction port
7 External air suction port
8 Evaporator
9 Heating heat exchanger
10 Compressor
11 Condenser
12 Expansion device
13 Refrigerant piping (piping)
14 Partitioning plate (partitioning portion)
20 Driver side air passage
21 Driver side air mix door
22 Driver side mixing space
23 Driver side vent outlet
23d Driver side vent door
24 Driver side foot outlet
24d Driver side foot door
25 Driver side defrost passage
30 Passenger side air passage
31 Passenger side air mix door
32 Passenger side mixing space
33 Passenger side vent outlet
33d Passenger side vent door
34 Passenger side foot outlet
34d Passenger side foot door
35 Passenger side defrost passage
40 Defrost outlet
40d Defrost door
50 (50A, 50B) Temperature sensor (fin contact type temperature sensor)
C Refrigeration cycle
F Sirocco fan
G Temperature difference
M Electric motor

## Claims

1. A vehicle-use air conditioning device, comprising:
a refrigeration cycle (C) wherein a compressor (10), a condenser (11), an expansion device (12), and an evaporator (8) are connected by piping (13), and around which a refrigerant circulates;
a temperature conditioning unit (1) having a blower (5), a case (3) that houses the evaporator in an air passage along which air sent by the blower flows, a partitioning portion (14) that partitions the air passage on a downstream side of the evaporator into a driver side air passage (20) and a passenger side air passage (30) separate from the driver side air passage, driver side outlets (23, 24) that communicate with the driver side air passage and blow out air to be supplied to a driver, passenger side outlets (33, 34) that communicate with the passenger side air passage and blow out air to be supplied to a passenger, driver side doors (23d, 24d) that open and close the driver side outlets, and passenger side doors (33d, 34d) that open and close the passenger side outlets;
a control device (2) that controls an air conditioning state of a vehicle interior, and can select a normal blowing mode, wherein the driver side doors are opened and the passenger side doors are opened, and a concentrated blowing mode, wherein the driver side doors are opened and the passenger side doors are closed; and
a temperature sensor (50B) that is disposed in contact with the evaporator in a region facing the passenger side air passage on the downstream side of the evaporator, and detects a temperature of the evaporator.

2. The vehicle-use air conditioning device according to claim 1, wherein the temperature conditioning unit (1) has
a defrost outlet (40) that communicates with the driver side air passage and/or the passenger side air passage and blows out air to be supplied to a windshield of a vehicle, and a defrost door (40d) that opens and closes the defrost outlet.

3. A vehicle-use air conditioning device control method, comprising:
a refrigeration cycle (C) wherein a compressor (10), a condenser (11), an expansion device (12), and an evaporator (8) are connected by piping (13), and around which a refrigerant circulates;
a temperature conditioning unit (1) having a blower (5), a case (3) that houses the evaporator in an air passage along which air sent by the blower flows, a partitioning portion (14) that partitions the air passage on a downstream side of the evaporator into a driver side air passage (20) and a passenger side air passage (30) separate from the driver side air passage, driver side outlets (23, 24) that communicate with the driver side air passage and blow out air to be supplied to a driver, passenger side outlets (33, 34) that communicate with the passenger side air passage and blow out air to be supplied to a passenger, driver side doors (23d, 24d) that open and close the driver side outlets, and passenger side doors (33d, 34d) that open and close the passenger side outlets;
a control device (2) that controls an air conditioning state of a vehicle interior, and can select a normal blowing mode, wherein the driver side doors are opened and the passenger side doors are opened, and a concentrated blowing mode, wherein the driver side doors are opened and the passenger side doors are closed; and
a temperature sensor (50A) that is disposed in contact with the evaporator in a region facing the driver side air passage on the downstream side of the evaporator, and detects a temperature of the evaporator, wherein
the control device (2)
stops an operation of the compressor (10) or reduces an amount of refrigerant discharged when a detected temperature (T₈ₐ) detected by the temperature sensor (50) reaches a lower limit value (T sd) min of a threshold temperature (T sd), and subsequently starts an operation of the compressor (10) or increases the amount of refrigerant discharged when the detected temperature (T_{8a'}) reaches an upper limit value (T sd) max of the threshold temperature (T sd), and
sets a threshold temperature (T sp) to a value higher than the threshold temperature (T sd) set when the normal blowing mode is selected when the concentrated blowing mode is selected.

4. The vehicle-use air conditioning device control method according to claim 3, wherein the threshold temperature (T sp) is set to a higher value the greater an amount of air sent by the blower (5).

5. The vehicle-use air conditioning device control method according to claim 3 or claim 4, wherein the temperature conditioning unit (1) has
a defrost outlet (40) that communicates with the driver side air passage and/or the passenger side air passage and blows out air to be supplied to a windshield of a vehicle, and a defrost door (40d) that opens and closes the defrost outlet.
